# EUROPÄISCHE PATENTSCHRIFT

(11) **EP 0 659 025 B1**
(45) Veröffentlichungstag und Bekanntmachung des Hinweises auf die Patenterteilung: **16.09.1998**
(21) Anmeldenummer: 94119892.1
(22) Anmeldetag: 16.12.1994
(51) Int. Cl.: H04N 11/16

(54) **Sender zur Erzeugung von Letterbox-codierten Fernsehsignalen**
Transmitter for generating letterbox encoded television signals
Emetteur pour engendrer des signaux de télévision codés en letter-box

(30) Priorität: 18.12.1993 DE 4343341
(43) Veröffentlichungstag der Anmeldung: 21.06.1995
(73) Patentinhaber: GRUNDIG Aktiengesellschaft, 90762 Fürth (DE)
(72) Erfinder: Silverberg, Michael, Dr.,GRUNDIG E.M.V., D-90762 Fürth (DE)

(56) Entgegenhaltungen:
- EP-A- 0 496 577
- DE-A- 4 235 770
- FERNSEH UND KINO TECHNIK, Bd. 45, Juli 1991 Seiten 347-355, HENTSCHEL ET AL. 'Probleme des Formatwechsels bei zukünftigen verbesserten pal-verfahren'

## Beschreibung

Die Erfindung betrifft einen Sender zur Erzeugung von Letterbox-codierten Fernsehsignalen mit den im Oberbegriff des Anspruchs 1 bzw. 4 bzw. 7 angegebenen Merkmalen.

Bei der Diskussion um zukünftige Fernsehsysteme muß unterschieden werden zwischen sog. HDTV-Systemen, welche mit einer höheren Zeilenzahl arbeiten als die heutigen Fernsehsysteme PAL, NTSC und SECAM und mit diesen nicht kompatibel sind, und verbesserten Fernsehsystemen, welche mit den heutigen Fernsehsystemen kompatibel sind. Verbesserte kompatible Fernsehsysteme haben den Vorteil, daß die heute auf dem Markt befindlichen Empfänger auch weiterhin verwendbar sind.

Ein derartiges verbessertes kompatibles Fernsehsystem ist unter der Bezeichnung PALplus bekannt geworden und ist beispielsweise in den folgenden Literaturstellen beschrieben:
- Zeitschrift Fernseh- und Kino-Technik, 45 Jg., Nr. 8/1991, S. 391-397;
- Zeitschrift Funkschau 18/1991, S. 66-71;
- Tagungsband Nr. 358 der International Broadcasting Convention, Amsterdam, July 1992, S. 203 - 207;
- Tagungsband Nr. 358 der International Broadcasting Convention, Amsterdam, July 1992, S. 160-164.

Beim PALplus-Fernsehsystem wird im Fernsehstudio, beispielsweise ausgehend von einem Zeilensprungsignal mit einem Seitenverhältnis von 16 : 9, einer Vertikalfrequenz von 50 Hz und einer Zeilenzahl von 625 pro Vollbild, ein zusammengesetztes PALplus-Signal erzeugt. Dazu wird das genannte 16 : 9 Zeilensprungsignal in einem PALplus-Coder zunächst einem Formatkonverter zugeführt und dort einer vertikalen Bandaufspaltung unterworfen, wobei die 576 aktiven Zeilen in einen vertikal niederfrequenten Bildteil, der in 432 Zeilen in die Bildmitte gelegt wird, und einen vertikal höherfrequenten Bildteil aufgeteilt, der mit reduzierter Amplitude in jeweils 72 Zeilen am oberen und unteren Bildrand im Bereich des Schwarzwertes farbträgerfrequent übertragen wird.

Das Bildmittensignal wird einer Schaltung zur bewegungsadaptiven Trennung von Luminanz- und Chrominanzkomponente zugeführt, welche eine Vorfilterung des Signals derart durchführt, daß auch in einem 16 : 9-Empfänger eine übersprechfreie Trennung von Luminanz- und Chrominanzkomponente möglich ist.

Die Art und Weise dieser Vorfilterung ist davon abhängig, ob das verwendete Bildquellenmaterial durch Abtastung eines Kinofilms erhalten oder mittels einer Videokamera erzeugt wurde. Wurde das verwendete Bildquellenmaterial durch Abtastung eines Kinofilms erhalten, dann weisen die beiden Halbbilder eines Vollbildes dieselbe Bewegungsphase auf und die Luminanz-/Chrominanz-Trennung erfolgt nach dem sog. "Color-Plus"-Verfahren, welches in der Zeitschrift Fernseh- und Kino-Technik, 44. Jg., Nr. 11/1990, S. 595 - 602, ausführlich beschrieben ist. Dieses Verfahren beruht darauf, daß zwei örtlich benachbarte Zeilen aufeinanderfolgender Halbbilder eine sich um 180° unterscheidende Farbhilfsträgerphase aufweisen. Dies ermöglicht eine Luminanz-/Chrominanz-Trennung durch einen einfachen Additions- oder Subtraktionsvorgang. Wurde das verwendete Bildquellenmaterial hingegen mittels einer Videokamera erzeugt, so erfolgt eine Luminanz-/Chrominanz-Trennung mittels eines bewegungsadaptiven Verfahrens, beispielsweise eines bewegungsadaptiven Color-Plus-Verfahrens.

Das Ausgangssignal der Schaltung zur bewegungsadaptiven Trennung von Luminanz- und Chrominanzkomponente wird unter Verwendung eines PAL-Modulators in ein FBAS-Signal umgesetzt, in welches schließlich mittels einer Schaltung zur Kennsignaleinfügung eine Kennung eingefügt wird, die Informationen über die Art der Bildquelle enthält.

Aus der Zeitschrift "Fernseh- und Kino-Technik", 45. Jg., Nr. 7/1991, S. 347-355, ist ein Sender zur Erzeugung von PALplus-codierten Signalen mit den im Oberbegriff des Anspruchs 1 angegebenen Merkmalen bekannt. Wie aus Bild 1 auf S. 348 hervorgeht, werden im bekannten Fall - um eine PALplus-Übertragung von Quellensignalen, die im 4 : 3-Format erzeugt wurden, zu ermöglichen - die 4 : 3-Signale über eine Kreuzschiene und einen 4 : 3/16 : 9-Wandler einem Mischer zugeführt. Dieser Mischer ist eingangsseitig weiterhin mit einer 16 : 9-Signalquelle und ausgangsseitig mit einem PALplus-Coder verbunden. Beim Übergang von einer 16 : 9- auf eine 4 : 3-Wiedergabe mittels des bekannten Senders erfolgt eine "harte" Umschaltung derart, daß ein 16 : 9-Empfänger plötzlich ein Bild mit schwarzen Streifen am linken und rechten Bildrand und ein 4 : 3-Empfänger plötzlich ein Bild mit schwarzen Streifen an allen 4 Bildrändern wiedergibt. Ein "weicher" Übergang unter Verwendung einer Blende ist mittels des bekannten Senders nicht erreichbar.

Ausgehend von diesem Stand der Technik liegt der Erfindung die Aufgabe zugrunde, einen Sender mit den im Oberbegriff des Anspruchs 1 bzw. 4 bzw. 7 angegebenen Merkmalen derart weiterzubilden, daß die oben genannten Nachteile beseitigt sind.

Diese Aufgabe wird bei einem Sender mit den im Oberbegriff des Anspruchs 1 bzw. 4 bzw. 7 angegebenen Merkmalen durch die im kennzeichnenden Teil des Anspruchs 1 bzw. 4 bzw. 7 angegebenen Merkmale gelöst. Vorteilhafte Ausgestaltungen ergeben sich aus den abhängigen Patentansprüchen.

Im folgenden wird die Erfindung anhand von Ausführungsbeispielen mittels der Figuren näher erläutert. Es zeigt
- Figur 1 ein erstes Ausführungsbeispiel für die Erfindung und
- Figur 2 ein zweites Auführungsbeispiel für die Erfindung.

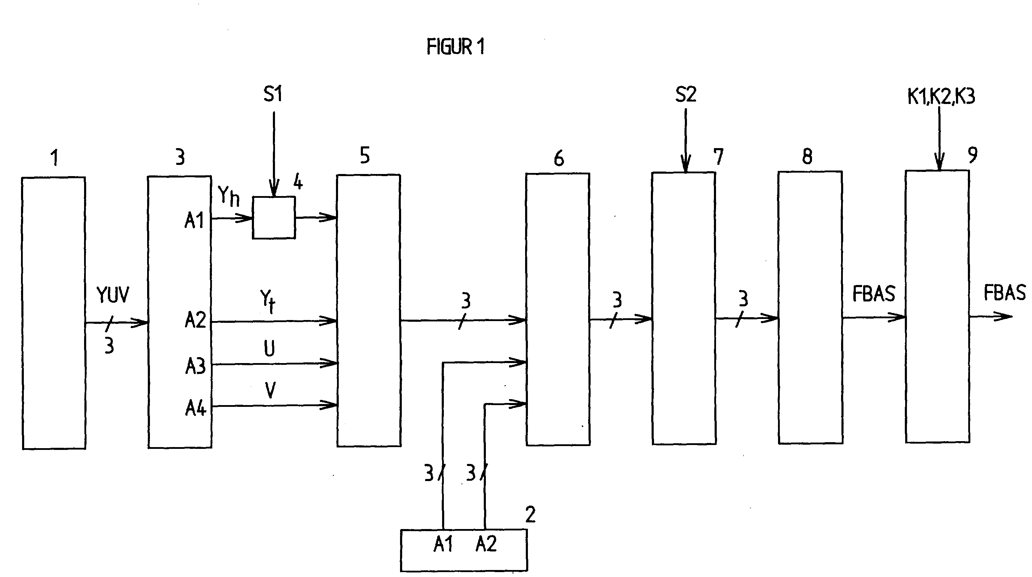

Der in Figur 1 gezeigte Sender weist eine erste Signalquelle 1 auf, die an ihrem Ausgang Fernsehsignale im Format 16 : 9, 2 : 1, 576 aktive Zeilen, in Form der Komponentensignale Y, U, V zur Verfügung stellt. Das Ausgangssignal der ersten Signalquelle 1 wird einem Formatkonverter 3, 4, 5 zugeführt, in welchem in grundsätzlich bekannter Weise (siehe beispielsweise Zeitschrift "Fernseh- und Kino-Technik", Nr. 10/1992, S. 673-679) sog. Letterbox-Signale (Bildmitteninformation) und Randzeilensignale (Helperinformation) erzeugt werden. Dazu erfolgt in einer Schaltung 3 zunächst eine vertikale Bandaufspaltung des Signals. Am Ausgang A1 der Schaltung 3 werden die vertikal hochfrequenten Anteile des Luminanzsignals im Basisband zur Verfügung gestellt. Diese werden über eine Schaltung 4, welche für die Erzeugung herkömmlicher Randzeilensignale ohne Bedeutung ist, in der aber in einer bestimmten Betriebsart, die unten ausführlich erläutert wird, die vertikal hochfrequenten Anteile des Luminanzsignals durch ein Schwarzpegelsignal ersetzt werden können, an einen Multiplexer 5 weitergegeben. Diesem werden weiterhin die am Ausgang A2 der Schaltung 3 zur Verfügung gestellten niederfrequenten Anteile des Luminanzsignals zugeführt. Weiterhin werden auch die an den Ausgängen A3 und A4 der Schaltung 3 erzeugten Farbdifferenzsignale U und V an den Multiplexer 5 weitergeleitet. Im Multiplexer 5 werden die vertikalen Höhensignale, die in jeweils 72 Zeilen am oberen und unteren Bildrand liegen, und die vertikalen Tiefensignale sowie die Farbdifferenzsignale U, V, die in 432 in der Bildmitte gelegenen Zeilen eingesetzt sind, zu kontinuierlichen Komponentensignalen Y, U, V zusammengefaßt.

Die Y, U, V-Ausgangssignale des Multiplexers 5 werden über einen Mischer 6 und eine Schaltung 7 zur bewegungsadaptiven Luminanz-/Chrominanz-Trennung einem PAL-Modulator 8 zugeführt, an dessen Ausgang zusammengesetztes 4 : 3-Farbfernsehsignal zur Verfügung steht. In dieses werden in einer Schaltung 9 zur Kennsignaleinfügung Kennsignale K1, K2 und K3 eingefügt, welche Informationen über die Quelle des vorliegenden Signals enthalten. Am Ausgang der Schaltung 9 liegt ein PALplus-codiertes Fernsehsignal vor.

Weiterhin weist der in Figur 1 gezeigte Sender eine zweite Signalquelle 2 auf, die an ihren Ausgängen A1 und A2 Fernsehsignale im Format 4 : 3, 2 : 1, 576 aktive Zeilen, in Form von Komponentensignalen Y, U, V zur Verfügung stellt.

Bei dem am Ausgang A1 anliegenden Signalen handelt es sich beispielsweise um einen Werbungsbeitrag, welcher mittels einer Kamera aufgenommen wurde. Dieser Werbungsbeitrag soll bei einem herkömmlichen 4 : 3-Empfänger formatfüllend und bei einem 16 : 9-Empfänger in Form einer 4 : 3-Einblendung mit schwarzen Streifen am linken und rechten Bildrand dargestellt werden.

Zur Umschaltung zwischen der Wiedergabe eines ersten Signals, welches von der ersten Signalquelle 1 abgeleitet ist, und der Wiedergabe eines zweiten Signals, welches von der zweiten Signalquelle 2 abgeleitet ist, wird ein Blendensignal verwendet, welches von der zweiten Signalquelle 2 an deren Ausgang A2 zur Verfügung gestellt wird.

Dieses Blendensignal wird derart erzeugt, daß es sowohl beim 16 : 9-Empfänger als auch beim herkömmlichen 4 : 3-Empfänger stets formatfüllend ist, d.h. daß keine schwarzen Randstreifen auftreten.

Der in Figur 1 gezeigte Sender arbeitet bei dieser Umschaltung wie folgt:

Zunächst ist der Mischer 6 für das Von der 16 : 9-Signalquelle 1 abgeleitete Signal durchlässig geschaltet. Dieses Signal wird in der Schaltung 7 im Sinne einer senderseitigen Vorfilterung einer bewegungsadaptiven Luminanz/Chrominanz-Trennung zugeführt und dann im PAL-Modulator 8 in ein zusammengesetztes Farbfernsehsignal umgesetzt. In dieses zusammengesetzte Farbfernsehsignal werden in der Schaltung 9 zur Kennsignaleinfügung Statusbits K1, K2 und K3 eingefügt, die Auskunft darüber geben, ob das Signal mittels einer Fernsehkamera oder mittels Filmabtastung erzeugt wurde (Statusbit K1), ob in den Randzeilen vertikal hochfrequente Luminanzsignalanteile (Helpersignale) vorliegen oder nicht (Statusbit K2) und daß das Signal von einer 16 : 9-Signalquelle erzeugt wurde (Statusbit K3).

Ausgehend von diesem Zustand erzeugt in einem ersten Arbeitsschritt eine nicht gezeichnete Steuereinheit, die alle in der Figur 1 gezeigten Bauteile steuert, ein Steuersignal S1, welches der Schaltung 4 zugeführt wird.

In der Schaltung 4 werden in Ansprache auf dieses Steuersignal die Randzeilensignale Yₕ ausgeblendet und stattdessen ein Schwarzpegelsignal erzeugt. Gleichzeitig erzeugt die Steuereinheit ein Steuersignal S2, welches der Schaltung 7 zur bewegungsadaptiven Luminanz-/Chrominanz-Trennung zugeführt wird. In der Schaltung 7 erfolgt in Ansprache auf dieses Steuersignal eine Signalverarbeitung im sog. Kameramode, d h. eine Signalverarbeitung auf Intrafield-Basis. Weiterhin erzeugt die Steuereinheit Statusbits K1 und K2, die Auskunft darüber geben, daß Kameramode vorliegt und daß in den Randzeilen des Signals keine Informationen vorliegen, die im 16 : 9-Empfänger zur Erhöhung der Vertikalauflösung verwendet werden können. Diese Statusbits K1 und K2 werden in der Schaltung 9 zur Kennsignaleinblendung in eine Kennsignalzeile der vertikalen Austastlücke, beispielsweise die Zeile 23, des zusammengesetzten Farbfernsehsignals eingetastet. Das Statusbit K3 bleibt unverändert.

Die Auswirkungen dieses ersten Arbeitsschrittes auf die Empfangsseite sind wie folgt:

Der 16 : 9-Empfänger erkennt anhand des Statusbits K2, daß in den Randzeilen des Signals keine auswertbaren Zusatzinformatonen (Helpersignale) vorliegen und errechnet die zum Erhalt eines vollformatigen 16 : 9-Bildes fehlenden 144 Zeilen ausschließlich aus der Bildmitteninformation, d.h. aus den 432 in der Bildmitte übertragenen Zeilen. Dies führt zwar zu einer verringerten Vertikalauflösung des Bildes, die aber für den Betrachter in vielen Fällen nicht störend ist.

Der 4 : 3-Empfänger zeigt - wie es beim PALplus-Verfahren allgemein üblich ist - ein Bild mit schwarzen Randzeilen am oberen und unteren Bildrand an.

In einem zweiten Arbeitsschritt schaltet die Steuereinheit den Mischer 6 für das vom Ausgang A1 der 4 : 3-Quelle 2 abgeleitete Blendensignal durchlässig. Bei diesem Blendensignal handelt es sich um ein im Kameramode erzeugtes Blendensignal, beispielsweise um einen auf dem Bildschirm von links nach rechts oder von oben nach unten laufenden Vorhang, der über das Bild geschoben wird.

Die Auswirkungen dieses zweiten Arbeitsschrittes auf die Empfangsseite sind wie folgt:

Der 16 : 9-Empfänger erkennt anhand des Statusbits K2, daß in den Randzeilen des Signals keine auswertbaren Zusatzinformationen (Helpersignale) vorliegen und errechnet die zum Erhalt eines vollformatigen 16 : 9-Bildes fehlenden 144 Zeilen ausschließlich aus der Bildmitteninformation, d.h. aus den 432 in der Bildmitte übertragenen Zeilen. Auch ein 4 : 3-Empfänger zeigt - da das Signal von einer 4 : 3-Signalquelle abgeleitet ist - ein vollformatiges Bild ohne schwarze Ränder.

Ist der Blendvorgang abgeschlossen, dann schaltet die Steuerschaltung den Mischer 6 für den vom Ausgang A1 der 4 : 3-Quelle 2 abgeleiteten Werbungsbeitrag durchlässig, welcher ebenfalls im Kameramode erzeugt wurde. Gleichzeitig ändert die Steuereinheit das der Schaltung 9 zugeführte Statusbit K3 derart, daß signalisiert wird, daß nunmehr das von der Signalquelle gelieferte Bild im 16 : 9-Empfänger mit einem Bildseitenverhältnis von 4 : 3 dargestellt werden soll.

Dies bewirkt, daß im 16 : 9-Empfänger aufgrund des geänderten Statusbits K3 ein ruckartiges Zusammenziehen des am Bildschirm dargestellten Signals von 16 : 9 auf das 4 : 3-Format erfolgt. Mittels des 4 : 3-Empfängers wird - da das Signal von einer 4 : 3-Signalquelle abgeleitet ist - ein vollformatiges Bild ohne schwarze Ränder dargestellt.

Ein Vorteil der in der Figur 1 gezeigten Anordnung besteht darin, daß auch die von der 4 : 3-Signalquelle 2 abgeleiteten Signale die Schaltung 7 zur bewegungsadaptiven Luminanz/Chrominanz-Trennung durchlaufen. Dies hat zur Folge, daß der Werbungsbeitrag auf dem Bildschirm des 16 : 9-Empfängers ohne störende Übersprecheffekte und mit verbesserter Auflösung dargestellt werden kann.

Bei der in Figur 1 gezeigten Ausführungsform ist die Schaltung 7 zur bewegungsadaptiven Luminanz-/Chrominanz-Trennung zwischen dem Mischer 6 und dem PAL-Modulator 8 angeordnet. Alternativ dazu ist es ebenso möglich, die Schaltung 7 entweder zwischen den Ausgängen A2, A3, A4 der Schaltung 3 und dem Multiplexer 5 oder zwischen dem Multiplexer 5 und dem Mischer 6 anzuordnen.

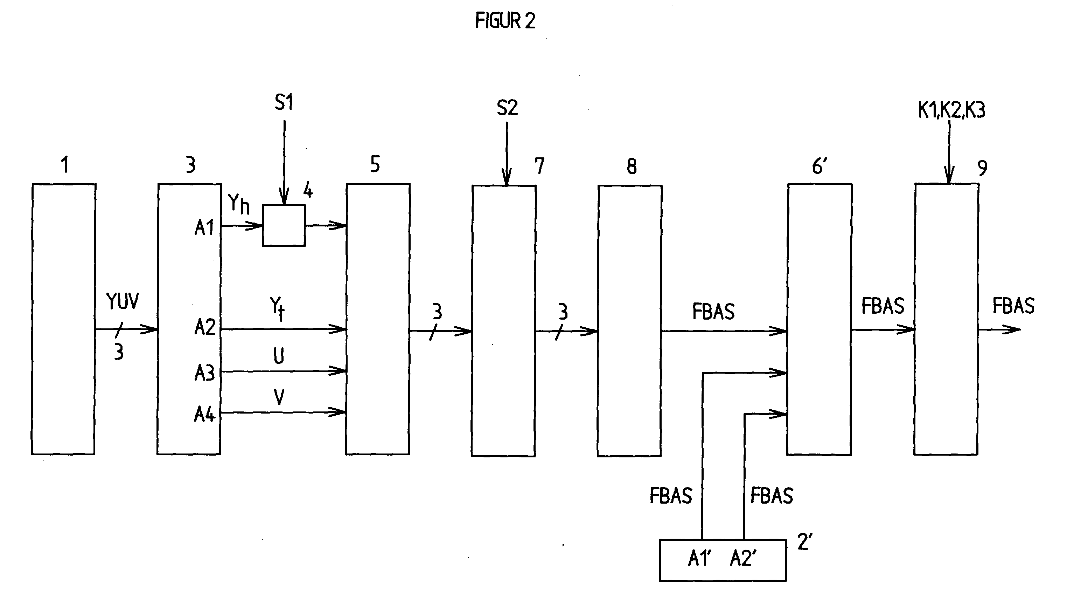

Der in Figur 2 gezeigte Sender unterscheidet sich von dem in Figur 1 gezeigten Sender lediglich dadurch, daß der Mischer 6' zwischen dem PAL-Modulator 8 und der Schaltung 9 zur Kennsignaleinblendung angeordnet ist und daß die zweite Signalquelle 2', an deren Ausgang 4 : 3-Signale anliegen, an ihren Ausgängen A1 und A2 FBAS-Signale zur Verfügung stellt. Somit liegen an den Eingängen des Mischers 6' ebenfalls FBAS-Signale an. Diese Ausführungsform hat den Vorteil, daß auch Werbebeiträge, die in FBAS-Form vorliegen, im Rahmen des oben beschriebenen Umblendvorganges verwendet werden können.

Wie die obigen Ausführungen zeigen, wird beim beanspruchten Sender die herkömmliche Architektur eines PALplus-Coders aufgetrennt und der zur Einblendung einer Blende und eines 4 : 3-Beitrages vorgesehene Mischer zwischen den Bausteinen des PALplus-Coders angeordnet.

Vorstehend wurde die Erfindung anhand eines Senders zur Erzeugung von PALplus-codierten Fernsehsignalen beschrieben. Es ist jedoch ebenso möglich, die Erfindung im Zusammenhang mit dem NTSC-Farbfernsehsystem zu verwenden.

## Patentansprüche

1. Sender zur Erzeugung von Letterbox-codierten Signalen, mit
- einer ersten Signalquelle (1), die an ihrem Ausgang Fernsehsignale mit einem Bildseitenverhältnis von 16 : 9 zur Verfügung stellt,
- einer zweiten Signalquelle (2), die an ihrem Ausgang Fernsehsignale mit einem Bildseitenverhältnis von 4 : 3 zur Verfügung stellt,
- einem Mischer (6), und
- einem Letterbox-Coder, welcher einen Formatkonverter (3, 4, 5) zur Erzeugung von Bildmittensignalen und Randzeilensignalen, eine Schaltung (7) zur bewegungsadaptiven Trennung von Luminanz- und Chrominanzkomponente, einen Farb-Modulator (8) und eine Schaltung (9) zur Kennsignaleinfügung aufweist,
**dadurch gekennzeichnet**, daß
- der Mischer (6) eingangsseitig mit den Ausgängen des Formatkonverters (3, 4, 5) des Letterbox-Coders und den Ausgängen der zweiten Signalquelle (2) verbunden, und
- der Farb-Modulator (8) zwischen dem Ausgang des Mischers (6) und der Schaltung (9) zur Kennsignaleinfügung angeordnet ist.

2. Sender nach Anspruch 1,
**dadurch gekennzeichnet**, daß
die erste und zweite Signalquelle jeweils Komponentensignale zur Verfügung stellen und daß dem Mischer (6) Komponentensignale zugeführt werden.

3. Sender nach Anspruch 1 oder 2,
**dadurch gekennzeichnet**, daß
der Formatkonverter (3, 4, 5) eine Schaltung (4) zum Ersetzen der Randzeilensignale durch ein Schwarzpegelsignal aufweist.

4. Sender zur Erzeugung von Letterbox-codierten Signalen, mit
- einer ersten Signalquelle (1), die an ihrem Ausgang Fernsehsignale mit einem Bildseitenverhältnis von 16 : 9 zur Verfügung stellt,
- einer zweiten Signalquelle (2'), die an ihrem Ausgang Fernsehsignale mit einem Bildseitenverhältnis von 4 : 3 zur Verfügung stellt,
- einem Mischer (6'), und
- einem Letterbox-Coder, welcher einen Formatkonverter (3, 4, 5) zur Erzeugung von Bildmittensignalen und Randzeilensignalen, eine Schaltung (7) zur bewegungsadaptiven Trennung von Luminanz- und Chrominanzkomponente, einen Farb-Modulator (8) und eine Schaltung (9) zur Kennsignaleinfügung aufweist,
**dadurch gekennzeichnet,** daß
der Mischer (6')
- eingangsseitig mit dem Ausgang des Farb-Modulators (8) des Letterbox-Coders und den Ausgängen der zweiten Signalquelle (2') sowie
- ausgangsseitig mit dem Eingang der Schaltung (9) zur Kennsignaleinfügung verbunden ist.

5. Sender nach Anspruch 4,
**dadurch gekennzeichnet,** daß
dem Mischer (6') FBAS-Signale zugeführt werden.

6. Sender nach Anspruch 4 oder 5,
**dadurch gekennzeichnet,** daß
der Formatkonverter (3, 4, 5) eine Schaltung (4) zum Ersetzen der Randzeilensignale durch ein Schwarzpegelsignal aufweist.

7. Sender zur Erzeugung von Letterbox-codierten Signalen, mit
- einer ersten Signalquelle (1), die an ihrem Ausgang Fernsehsignale mit einem Bildseitenverhältnis von 16 : 9 zur Verfügung stellt,
- einer zweiten Signalquelle (2), die an ihrem Ausgang Fernsehsignale mit einem Bildseitenverhältnis von 4 : 3 zur Verfügung stellt,
- einem Mischer (6), und
- einem Letterbox-Coder, welcher einen Formatkonverter (3,4,5) zur Erzeugung von Bildmittensignalen und Randzeilensignalen, eine Schaltung (7) zur bewegungsadaptiven Trennung von Luminanz- und Chrominanzkomponente, einen Farb-Modulator (8) und eine Schaltung (9) zur Kennsignaleinfügung aufweist,
**dadurch gekennzeichnet,** daß
- der Mischer (6) eingangsseitig mit den Ausgängen der Schaltung (7) zur bewegungsadaptiven Trennung von Luminanz- und Chrominanzkomponente und den Ausgängen der zweiten Signalquelle (2) verbunden, und
- der Farb-Modulator (8) zwischen dem Ausgang des Mischers (6) und der Schaltung (9) zur Kennsignaleinfügung angeordnet ist.

8. Sender nach Anspruch 7,
**dadurch gekennzeichnet**, daß
die erste und zweite Signalquelle jeweils Komponentensignale zur Verfügung stellen und daß dem Mischer (6) Komponentensignale zugeführt werden.

9. Sender nach Anspruch 7 oder 8,
**dadurch gekennzeichnet**, daß
der Formatkonverter (3, 4, 5) eine Schaltung (4) zum Ersetzen der Randzeilensignale durch ein Schwarzpegelsignal aufweist.

## Claims

1. Transmitter for generating letterbox-enccded signals, comprising
- a first signal source (1) which provides television signals having a picture aspect ratio of 16:9 at its output,
- a second signal source (2) which provides television signals having a picture aspect ratio of 4:3 at its output,
- a mixer (6) and
- a letterbox encoder which has a format converter (3, 4, 5) for generating picture centre signals and peripheral-line signals, a circuit (7) for the motion-adaptive separation of luminance and chrominance components, a colour modulator (8) and an identification signal insertion circuit (9),
characterized in that
- the mixer (6) is connected on the input side to the outputs of the format converter (3, 4, 5) of the letterbox encoder and the outputs of the second signal source (2), and
- the colour modulator (8) is disposed between the output of the mixer (6) and the identification signal insertion circuit (9).

2. Transmitter according to Claim 1, characterized in that the first and second signal sources each provide component signals and in that component signals are fed to the mixer (6).

3. Transmitter according to Claim 1 or 2, characterized in that the format converter (3, 4, 5) has a circuit (4) for replacing the peripheral-line signals by a black-level signal.

4. Transmitter for generating letterbox-encoded signals, comprising
- a first signal source (1) which provides television signals having a picture aspect ratio of 16:9 at its output,
- a second signal source (2') which provides television signal having a picture aspect ratio of 4:3 at its output,
- a mixer (6'), and
- a letterbox encoder which has a format converter (3, 4, 5) for generating picture centre signals and peripheral-line signals, a circuit (7) for the motion-adaptive separation of luminance and chrominance components, a colour modulator (8) and an identification-signal insertion circuit (9),
characterized in that the mixer (6')
- is connected on the input side to the output of the colour modulator (8) of the letterbox encoder and the outputs of the second signal source (2') and
- is connected on the output side to the input of an identification-signal insertion circuit (9).

5. Transmitter according to Claim 4, characterized in that CCVS signals are fed to the mixer (6').

6. Transmitter according to Claim 4 or 5, characterized in that the format converter (3, 4, 5) has a circuit (4) for replacing the peripheral-line signals by a black-level signal.

7. Transmitter for generating letterbox-encoded signals, comprising
- a first signal source (1) which provides television signals having a picture aspect ratio of 16:9 at its output ,
- a second signal source (2) which provides television signals having a picture aspect ratio of 4:3 at its output,
- a mixer (6) and
- a letterbox encoder which has a format converter (3, 4, 5) for generating picture centre signals and peripheral-line signals, a circuit (7) for the motion-adaptive separation of luminance and chrominance components, a colour modulator (8) and an identification-signal insertion circuit (9),
characterized in that
- the mixer (6) is connected on the input side to the outputs of the circuit (7) for the motion-adaptive separation of luminance and chrominance components and the outputs of the second signal source (2), and
- the colour modulator (8) is disposed between the output of the mixer (6) and the identification-signal insertion circuit (9).

8. Transmitter according to Claim 7, characterized in that the first and second signal sources each provide component signals and in that component signals are fed to the mixer (6).

9. Transmitter according to Claim 7 or 8, characterized in that the format converter (3, 4, 5) has a circuit (4) for replacing the peripheral-line signals with a black-level signal.

## Revendications

1. Emetteur pour produire des signaux codés au moyen du codage mnémonique, comportant :
- une première source de signaux (1), qui délivre à sa sortie des signaux de télévision possédant un format d'image 16:9,
- une seconde source de signaux (2), qui délivre à sa sortie des signaux de télévision ayant un format d'image 4:3,
- un mélangeur (6), et
- un codeur mnémonique qui comporte un convertisseur de format (3,4,5) servant à produire des signaux du centre d'image et des signaux de lignes marginales, un circuit (7) pour séparer, d'une manière adaptative du point de vue déplacement, des composantes de luminance et de chrominance, un modulateur de couleurs (8) et un circuit (9) pour introduire des signaux caractéristiques,
caractérisé en ce que
- le mélangeur (6) est relié, côté entrée, aux sorties du convertisseur de format (3,4,5) du codeur mnémonique et aux sortie de la seconde source de signaux (2), et
- le modulateur de couleurs (8) est disposé entre la sortie du mélangeur (6) et le circuit (9) pour l'introduction de signaux caractéristiques.

2. Emetteur selon la revendication 1, caractérisé en ce que les première et seconde sources de signaux délivrent chacune des signaux de composantes et que les signaux de composantes sont envoyés au mélangeur (6).

3. Emetteur selon la revendication 1 ou 2, caractérisé en ce que le convertisseur de format (3,4,5) comporte un circuit (4) servant à remplacer des signaux de lignes marginales par un signal de niveau du noir.

4. Emetteur pour produire des signaux codés selon le codage mnémonique, comportant
- une première source de signaux (1), qui délivre à sa sortie des signaux de télévision possédant un format d'image 16:9,
- une seconde source de signaux (2), qui délivre à sa sortie des signaux de télévision ayant un format d'image 4:3,
- un mélangeur (6'), et
- un codeur mnémonique qui comporte un convertisseur de format (3,4,5) servant à produire des signaux du centre d'image et des signaux de lignes marginales, un circuit (7) pour séparer, d'une manière adaptative du point de vue déplacement, des composantes de luminance et de chrominance, un modulateur de couleurs (8) et un circuit (9) pour introduire des signaux caractéristiques,
caractérisé en ce que le mélangeur (6') est relié
- côté entrée à la sortie du modulateur de couleurs (8) du codeur mnémonique et aux sortie de la seconde source de signaux (2') ainsi que
- côté sortie, à l'entrée du circuit (9) pour l'introduction de signaux caractéristiques.

5. Emetteur selon la revendication 4, caractérisé en ce que des signaux FBAS sont envoyés au mélangeur (6').

6. Emetteur selon la revendication 4 ou 5, caractérisé en ce que le convertisseur de format (3,4,5) comporte un circuit (4) pour remplacer les signaux des lignes marginales par un signal de niveau du noir.

7. Emetteur pour produire des signaux codés au moyen du codage mnémonique, comportant :
- une première source de signaux (1), qui délivre à sa sortie des signaux de télévision possédant un format d'image 16:9,
- une seconde source de signaux (2), qui délivre à sa sortie des signaux de télévision ayant un format d'image 4:3,
- un mélangeur (6), et
- un codeur mnémonique qui comporte un convertisseur de format (3,4,5) servant à produire des signaux du centre d'image et des signaux de lignes marginales, un circuit (7) pour séparer, d'une manière adaptative du point de vue déplacement, des composantes de luminance et de chrominance, un modulateur de couleurs (8) et un circuit (9) pour introduire des signaux caractéristiques,
caractérisé en ce que
- le mélangeur (6) est relié côté entrée aux sorties du circuit (7) pour la séparation, adaptative du point de vue déplacement, de composantes de luminance et de chrominance et aux sorties de la seconde source de signaux (2), et
- le modulateur de couleurs (8) est disposé entre la sortie du mélangeur (6) et du circuit (9) pour l'introduction de signaux caractéristiques.

8. Emetteur selon la revendication 7, caractérisé en ce que les première et seconde sources de signaux délivrent respectivement des signaux de composantes et que des signaux de composantes sont envoyés au mélangeur (6).

9. Emetteur selon la revendication 7 ou 8, caractérisé en ce que le convertisseur de format (3,4,5) comporte un circuit (4) pour remplacer les signaux de lignes marginales par un signal de niveau du noir.
